# EUROPÄISCHE PATENTSCHRIFT

(11) **EP 3 425 300 B1**
(45) Veröffentlichungstag und Bekanntmachung des Hinweises auf die Patenterteilung: **02.11.2022**
(21) Anmeldenummer: 18000574.6
(22) Anmeldetag: 04.07.2018
(51) Int. Cl.: F24F 12/00, F24D 11/02

(54) **VERFAHREN ZUR KLIMATISIERUNG EINES GEBÄUDES UND EIN GEBÄUDE MIT EINER VORRICHTUNG ZUR DURCHFÜHRUNG DES VERFAHRENS**
METHOD FOR AIR-CONDITIONING A BUILDING AND A BUILDING WITH DEVICE FOR EXECUTING THE METHOD
PROCÉDÉ DE CLIMATISATION D'UN BÂTIMENT ET BÂTIMENT AVEC DISPOSITIF DE MISE EN OEUVRE DUDIT PROCÉDÉ

(30) Priorität: 07.07.2017 DE 102017006460
(43) Veröffentlichungstag der Anmeldung: 09.01.2019
(73) Patentinhaber: ZLT Lüftungs- und Brandschutztechnik GmbH, 09387 Jahnsdorf / Erzgeb. (DE)
(72) Erfinder: Rieck, Markus, 96117 Memmelsdorf (DE)
(74) Vertreter: Findeisen Neumann Scheit Partnerschaft mbB

(56) Entgegenhaltungen:
- EP-A2- 2 634 500
- DE-B4-102007 041 041
- GB-A- 2 524 551

## Beschreibung

Die Erfindung betrifft ein Verfahren zur Klimatisierung eines Gebäudes und ein Gebäude mit einer Vorrichtung zur Durchführung des Verfahrens.

Aus dem Stand der Technik sind zahlreiche Vorrichtungen zur Klimatisierung von Gebäuden bekannt. Eine derartige Vorrichtung wird beispielsweise in DE 10 2014 000 232 A1 offenbart. Diese Vorrichtung weist eine Wärmepumpe, einen Wärmespeicher, einen Kältespeicher und verschiedene Wärmequellen auf. Die Wärmequellen können hier beispielsweise ein Solarkollektor, ein Luftabsorber oder die Abwärme eines Gebäudes sein. Mit einer Entnahme von Wärme aus dem Wärmespeicher ist eine Beheizung des Gebäudes möglich. Eine Kühlung des Gebäudes ist über das Zuführen von Wärme aus dem Gebäude an den Kältespeicher möglich. Das Beladen des Wärmespeichers erfolgt in einem Kreislauf über eine der Wärmequellen, die Wärmepumpe und den Wärmespeicher. Der Kältespeicher wird durch Umkehr der Betriebsart der Wärmepumpe und der Abgabe von Wärme über einen oder mehrere der Wärmequellen abgekühlt. So ist vorgesehen, dass im Sommer der Kältespeicher für die Kühlung des Gebäudes und im Winter der Wärmespeicher für die Erwärmung des Gebäudes genutzt wird.

Eine weitere Vorrichtung wird in WO 2015/015244 A1 beschrieben. Auch hier ist die Vorrichtung mit einem Wärmespeicher, einem Kältespeicher, einem Luft-Absorber und einer Wärmepumpe ausgebildet. Über eine Steuerung verschiedener Ventile zwischen den Elementen der Einrichtung sind verschiedene Betriebsarten möglich. So ist beispielsweise in einer Tagbetriebsart der Wärmespeicher über den Luft-Absorber mit Wärmeenergie aufladbar. In einer Nachtbetriebsart ist Wärmeenergie aus dem Kältespeicher über den Luft-Absorber abführbar. Zur Optimierung des Betriebs kann die im Kreislauf zwischen den Speichern und dem Luft-Wärmetauscher befindliche Wärmepumpe genutzt werden.

Nachteilig bei diesen Vorrichtungen ist, dass bei ungünstigen Temperaturverhältnissen an den Wärmequellen nur ein ineffizienter Betrieb der Wärmepumpe möglich ist. Wird beispielsweise die von der Abluft des Gebäudes mitgeführte Wärme als Wärmequelle genutzt und diese über einen Wärmetauscher und der Wärmepumpe dem Wärmespeicher zugeführt, so wird bei einer niedrigen Ablufttemperatur nur ein geringer Wirkungsgrad beim Übertragen von Wärmeenergie erreicht. Weiterhin ist es mit diesen Vorrichtungen nur möglich, entweder alle Räume zu erwärmen oder alle Räume zu kühlen.

In DE 198 13 157 C2 wird eine raumlufttechnische Anlage zur Klimatisierung eines Gebäudes vorgeschlagen. Diese Anlage ist mit einem Zuluftkanal und einem Fortluftkanal ausgebildet, wobei zwischen beiden Kanälen mithilfe eines Wärmerückgewinnungssystems Wärmeenergie überführt werden kann. Im Fortluftkanal ist hierfür ein Kondensator einer Wärmepumpe angeordnet. Ein zu dieser Wärmepumpe gehörender Verdampfer ist in dem Zuluftkanal untergebracht, sodass der Zuluft Wärme entnommen und diese Wärme auf die Fortluft übertragen und von dieser abgeführt wird. Sowohl der Zuluftkanal, als auch der Fortluftkanal sind mit je einer Klappe zum Zuführen von Abluft und Außenluft ausgestaltet. Diese vier Klappen sind unabhängig voneinander regelbar, sodass in einer Klappenstellung dem Abluftstrom Außenluft zugemischt werden kann und dieses Gemisch dem Kondensator zugeführt und anschließend als Fortluft abgeführt wird. Durch Beimischen von Außenluft in den Fortluftstrom kann damit auch bei ungünstigen Temperaturverhältnissen die Kondensatorleistung optimal ausgenutzt werden.

Nachteilig bei dieser raumlufttechnischen Anlage ist aber, dass keinerlei Wärme- oder Kältespeicher vorgesehen sind und die Luftströme immer über das Wärmerückgewinnungssystem geführt werden, auch dann, wenn kein Übertrag von Wärmeenergie zwischen den Luftströmen nötig ist. Dies ist beispielsweise dann der Fall, wenn zur Kühlung des Gebäudes bei ausreichend niedriger Außentemperatur warme Abluft direkt an die Außenluft abgegeben werden kann.

Aus EP 2 492 604 A1 ist es bekannt, in einer raumlufttechnischen Anlage einen regelbaren Bypasskanal zur Abführung von Abluft unter Umgehung des Wärmerückgewinnungssystems vorzusehen. Bei geschlossenem Bypasskanal ist mit diesem System eine Übertragung von Wärme aus dem Abluftstrom zurück in das Gebäude allerdings nur über eine direkte Übertragung von Wärme zwischen dem Abluftstrom und dem Zuluftstrom mittels Luft-Luft-Wärmetauscher möglich.

Die DE 10 2007 041 041 B4 beschreibt ein System zum Heizen und/oder Lüften von Räumen. Dieses System weist einen Gegenstrom-Wärmetauscher auf, mit dem eine Wärmeübertragung zwischen einem Abluftstrom und einem Zuluftstrom erzielt wird. Weiterhin verfügt das System über einen Speicher, der über eine reversible Wärmepumpenanordnung durch Wärmeaustausch mit dem Abluft- und einem Fortluftstrom beladbar oder entladbar ist. Eine Klimatisierung der Räume erfolgt durch Wärmeaustausch zwischen den Räumen und dem Speicher, wobei die Wärmezufuhr bzw. der Wärmeentzug über den Zuluftstrom erfolgt. Nachteilig ist insbesondere, dass mit diesem System immer nur alle Räume geheizt oder alle Räume nur gekühlt werden können. Darüber hinaus wird die Abluft immer über den Gegenstrom-Wärmetauscher geführt, sodass beispielsweise bei einem mit Wärme ausreichend gefüllten Speicher kein energieeffizienter Betrieb des Systems möglich ist.

In GB 2 524 551 A1 wird ein System zum Heizen und Kühlen eines Gebäudes beschrieben. Das System ist in verschiedenen Betriebsmodi betreibbar. In einem ersten Betriebsmodus wird ein Abluftstrom aus dem Gebäude über einen Luft-Luft-Wärmetauscher geleitet und als Fortluftstrom abgeführt. Über denselben Luft-Luft-Wärmetauscher wird Außenluft geleitet, welche als Zuluftstrom in das Gebäude geführt wird. Am Luft-Luft-Wärmetauscher erfolgt eine Wärmeübertragung zwischen Abluftstrom und Zuluftstrom. Sofern die Temperatur eines Wärmespeichers des Systems niedriger ist als die Temperatur der Außenluft, wird in einem zweiten Betriebsmodus ein Außenluftstrom über den Wärmespeicher geführt, sodass Wärmeenergie aus diesem Außenluftstrom an den Wärmespeicher übertragen wird. Der abgekühlte Außenluftstrom wird dann wie im ersten Betriebsmodus über den Luft-Luft-Wärmetauscher als Zuluft in das Gebäude geleitet. Ist die Temperatur der Außenluft niedriger als die Temperatur eines Kältespeichers des Systems, wird in einem dritten Betriebsmodus der Außenluftstrom über den Kältespeicher geführt, sodass Wärmeenergie aus dem Kältespeicher auf den Außenluftstrom übertragen wird. Der erwärmte Außenluftstrom wird dann wie im ersten Betriebsmodus über den Luft-Luft-Wärmetauscher als Zuluft in das Gebäude transferiert. In einem vierten Betriebsmodus wird solare Wärme von einem Solarkollektor des Systems auf den Wärmespeicher übertragen. Der fünfte Betriebsmodus sieht ergänzend zum vierten Betriebsmodus ein Übertragen von solarer Wärme auf einen Brauchwasserspeicher des Systems vor. Ist die Temperatur des Kältespeichers höher als die Temperatur der Frischluft, kann in einem sechsten Betriebsmodus wie im vierten Betriebsmodus kalte Frischluft zum Kältespeicher geführt werden, wobei hier Wärmeenergie aus dem Kältespeicher an den Frischluftstrom übertragen wird. Anders als im vierten Betriebsmodus wird der erwärmte Frischluftstrom anschließend aber wieder an die Umgebung abgeführt und nicht in das Gebäude transferiert. Mit einem siebten Betriebsmodus wird, insbesondere in kalten Jahreszeiten, Wärmeenergie aus dem Wärmespeicher über einen Luft-Flüssigkeits-Wärmetauscher an einen in das Gebäude gerichteten Zuluftstrom übertragen. Für warme Jahreszeiten wird hingegen in einem achten Betriebsmodus Wärmeenergie über den Luft-Flüssigkeits-Wärmetauscher von dem in das Gebäude gerichteten Zuluftstrom auf den Kältespeicher übertragen. In einem neunten Betriebsmodus wird mit einer Wärmepumpe Wärmeenergie zwischen dem Kältespeicher und dem Wärmespeicher transferiert. Der zehnte Betriebsmodus sieht vor, dass bei insbesondere heißen Tagen Wärmeenergie von dem in das Gebäude gerichteten Zuluftstrom auf den Brauchwasserspeicher überführt wird.

Aufgabe der Erfindung ist es, ein Verfahren und eine Vorrichtung zur Klimatisierung von Gebäuden vorzuschlagen, die sowohl zum Kühlen, als auch zum Erwärmen des Gebäudes geeignet sein soll, wobei abhängig von den Temperaturverhältnissen der Gebäudeluft und der Außenluft ein energieeffizienter Betrieb der Vorrichtung möglich sein soll. Weiterhin soll mit dieser Vorrichtung sowohl das Kühlen oder Heizen einzelner Räume des Gebäudes und parallel das Heizen bzw. Kühlen anderer Räume des Gebäudes realisierbar sein.

Diese Aufgabe wird dadurch gelöst, dass in einem ersten Heizbetriebsmodus Luftstromwärmenergie eines Abluftstroms des Gebäudes auf einen Wärmespeicher übertragen wird und dieser Abluftstrom anschließend als Fortluftstrom abgeführt wird und im Bedarfsfall Wärmeenergie vom Wärmespeicher als Gebäudewärmeenergie an das Gebäude übertragen wird. In einem ersten Kühlbetriebsmodus wird Wärmeenergie aus einem Kältespeicher auf einen Abluftstrom übertragen, dieser Abluftstrom anschließend als Fortluftstrom abgeführt und im Bedarfsfall Gebäudewärmeenergie des Gebäudes auf den Kältespeicher übertragen. Mit einem zweiten Heizbetriebsmodus wird ein Abluftstrom des Gebäudes mit einem Außenluftstrom zu einem Mischluftstrom gemischt, Luftstromwärmeenergie dieses Mischluftstroms in einen Wärmespeicher überführt, der Mischluftstrom anschließend als Fortluftstrom abgeführt und im Bedarfsfall Wärmeenergie vom Wärmespeicher als Gebäudewärmeenergie an das Gebäude übertragen. In einem zweiten Kühlbetriebsmodus wird ein Abluftstrom des Gebäudes mit einem Außenluftstrom zu einem Mischluftstrom gemischt, Wärmeenergie aus einem Kältespeicher auf diesen Mischluftstrom übertragen, der Mischluftstrom anschließend als Fortluftstrom abgeführt und im Bedarfsfall Gebäudewärmeenergie aus dem Gebäude auf den Kältespeicher übertragen. Mit einem Komfortmodus wird alternierend Luftstromwärmeenergie von einem Abluftstrom des Gebäudes auf einen Wärmespeicher, Wärmeenergie eines Kältespeichers auf den Abluftstrom übertragen, dieser Abluftstrom als Fortluftstrom abgeführt und im Bedarfsfall Wärmeenergie aus dem Wärmespeicher als Gebäudewärmeenergie dem Gebäude und/oder Gebäudewärmeenergie dem Kältespeicher zugeführt. Mit einem Energiesparmodus wird der Abluftstrom direkt als Fortluftstrom abgeführt.

Vorteilhaft ist hierbei, dass im zweiten Heizbetriebsmodus neben der vom Abluftstrom mitgeführten Luftstromwärmeenergie auch die Luftstromwärmeenergie der Außenluft zum Erwärmen des Wärmespeichers genutzt werden. Dies ist insbesondere dann nützlich, wenn während einer Heizperiode zeitweilig, z.B. zu bestimmten Tageszeiten, die Außenluft eine höhere Temperatur aufweist als die Abluft und durch Zumischen von Außenluft im zweiten Heizbetriebsmodus dem Wärmespeicher mehr Wärmeenergie zugeführt werden kann, als nur mit der Abluft. Der zweite Kühlbetriebsmodus kann hingegen dann genutzt werden, wenn beispielsweise grundsätzlich eine Kühlung des Gebäudes benötigt wird und der Abluftstrom aber bereits eine hohe Temperatur aufweist, sodass eine Übertragung von Wärmeenergie aus dem Kältespeicher auf den bereits warmen Abluftstrom ineffektiv ist. Hat die Außenluft dann eine niedrigere Temperatur als die Abluft, wird die Außenluft der Abluft zugemischt, sodass der entstehende Mischluftstrom eine niedrigere Temperatur als der Abluftstrom aufweist und damit die Übertragung der Wärmeenergie vom Kältespeicher auf diesen Mischluftstrom deutlich effektiver erfolgt. Sofern die Temperaturverhältnisse der Abluft und der Außenluft nicht für den zweiten Heizbetriebsmodus bzw. den zweiten Kühlbetriebsmodus geeignet sind, ist im ersten Heizbetriebsmodus und im ersten Kühlbetriebsmodus ein Übertragen von Luftstromwärmeenergie allein aus dem Abluftstrom auf den Wärmespeicher bzw. ein Übertragen von Wärmeenergie aus den Kältespeicher allein an den Abluftstrom möglich. Ein Umschalten zwischen diesen Betriebsmodi kann dabei beispielsweise mit üblicher Steuer- und Regeltechnik erfolgen, wobei als Steuer- bzw. Regelgrößen insbesondere die Temperaturen der Abluft und der Außenluft sowie eine gewünschte Gebäudelufttemperatur genutzt werden können. Darüber hinaus können auch die Luftfeuchtigkeit der Abluft und der Außenluft als Steuer- bzw. Regelgröße genutzt werden, da die Luftfeuchtigkeit einen großen Einfluss auf den kalorischen Energiegehalt der Luft hat. Mit dem Komfortmodus ergibt sich der Vorteil, dass in einem Gebäude einige Räume geheizt und andere gekühlt werden können. Dies kann beispielsweise bei einem Gebäude sinnvoll sein, bei dem ein Teil der Räume auf einer Nordseite und ein anderer Teil der Räume auf einer Südseite angeordnet sind. So kann beispielsweise tagsüber die warme Abluft der auf der Südseite gelegenen Räume zum Erwärmen des Wärmespeichers genutzt werden. Über den Energiesparmodus kann beispielsweise bei einem bereits vollständig aufgeladenen Wärmespeicher die Abluft unter Umgehung eines Wärmeübertragers an die Außenluft abgeführt werden. Durch die Umgehung des Wärmeübertragers kann die Abluft energieeffizienter aus dem Gebäude abgeführt werden, da bei Umgehung des Wärmeübertragers und eines optionalen Luftfilters vor dem Wärmeübertrager die Druckverluste dieser Komponenten nicht anfallen. Das Gesamtsystem zeichnet sich also durch die Möglichkeit aus, einzelne Räume eines Gebäudes zu heizen, während andere gekühlt werden, wobei hierfür ein energieeffizienter Betrieb der Wärmepumpe zum Be- und Entladen der Speicher erzielt wird.

In einer Ausgestaltung wird im Komfortmodus dem Abluftstrom vor der Übertragung der Luftstromwärmeenergie auf den Wärmespeicher bzw. vor der Übertragung der Wärmeenergie des Kältespeichers auf den Abluftstrom ein Außenluftstrom beigemischt und dieser anschließend zusammen mit dem Abluftstrom als Fortluftstrom abgeführt.

Damit werden die bereits oben genannten Vorteile des zweiten Heizbetriebsmodus und des zweiten Kühlbetriebsmodus zum effektiven Beladen der Wärme- und Kältespeicher durch effektiven Betrieb der Wärmepumpenanordnung genutzt. Die Energieeffizienz beim Betrieb des Gesamtsystems kann damit weiter gesteigert werden.

Es wird vorgeschlagen, dass beim Mischen des Abluftstroms mit dem Außenluftstrom die Anteile des Abluftstroms und des Außenluftstroms variiert werden.

Diese Ausführung ist vorteilhaft, da auch bei der Nutzung der Außenluft zum Abführen von Wärme bzw. als Wärmequelle das Abführen von Abluft aus dem Gebäude möglich ist und damit die Lüftungsfunktion des Systems aufrechterhalten wird.

In einer Ausgestaltung wird in einem Brandmodus ein Rauchgase führender Abluftstrom des Gebäudes direkt an die Außenluft abgeführt.

Es wird vorgeschlagen, dass dem Gebäude untemperierte oder temperierte Außenluft als Zuluftstrom zugeführt wird.

Eine Ausführung sieht vor, dass im ersten Heizbetriebsmodus und im zweiten Heizbetriebsmodus zumindest ein Teil der Gebäudewärmeenergie auf den Zuluftstrom des Gebäudes übertragen wird.

Eine weitere Ausführung sieht vor, dass im ersten Kühlbetriebsmodus und im zweiten Kühlbetriebsmodus Zuluftwärmeenergie des Zuluftstroms des Gebäudes auf den Kältespeicher übertragen wird.

Damit ist es zum einen möglich, die Zuluft ohne ein zusätzliches Zuluftgerät als Außenluft dem Gebäude zuzuführen und entsprechend einer Zieltemperatur innerhalb des Gebäudes zu temperieren. Natürlich kann diese Temperierung auch mit einer in einem Zuluftgerät vortemperierten Zuluft kombiniert werden.

Weiterhin wird ein Gebäude mit einer Vorrichtung zur Klimatisierung des Gebäudes vorgeschlagen, wobei die Vorrichtung einen ersten Pufferspeicher, einen zweiten Pufferspeicher, eine reversibel arbeitende Wärmepumpenanordnung, einen Luft-Flüssigkeit-Wärmetauscher, einen in dem ersten Pufferspeicher angeordneten ersten Flüssigkeit-Flüssigkeit-Wärmetauscher und einen in dem zweiten Pufferspeicher angeordneten zweiten Flüssigkeit-Flüssigkeit-Wärmetauscher aufweist. Die Wärmepumpenanordnung bildet einen ersten Kühlmittelkreislauf zwischen dem ersten Flüssigkeit-Flüssigkeit-Wärmetauscher und dem Luft-Flüssigkeit-Wärmetauscher und einen zweiten Kühlmittelkreislauf zwischen dem zweiten Flüssigkeit-Flüssigkeit-Wärmetauscher und dem Luft-Flüssigkeit-Wärmetauscher. Die Wärmepumpenanordnung ist zwischen dem ersten Kühlmittelkreislauf und dem zweiten Kühlmittelkreislauf umschaltbar. Der erste und der zweite Pufferspeicher sind als Wärmespeicher und Kältespeicher betreibbar und jeweils mit einer Temperiervorrichtung des Gebäudes verbunden. Ein Abluftstrom des Gebäudes ist mit einer Umlenkvorrichtung durch den Luft-Flüssigkeit-Wärmetauscher oder entlang einer den Luft-Flüssigkeit-Wärmetauscher umgehenden ersten Bypassanordnung führbar. Ein Außenluftstrom ist dem Abluftstrom über eine zweite Bypassanordnung beimischbar

Dieses Gebäude ist für die Durchführung des zuvor beschriebenen erfindungsgemäßen Verfahrens verwendbar. Mit dem ersten Kühlmittelkreislauf ist zwischen dem von der Abluft durchströmten Luft-Flüssigkeit-Wärmetauscher und dem ersten Pufferspeicher Wärme transferierbar und entsprechend über den zweiten Kühlmittelkreislauf Wärme zwischen dem Luft-Flüssigkeit-Wärmetauscher und dem zweiten Pufferspeicher. Da die Wärmepumpenanordnung reversibel arbeitend und umschaltbar zwischen ersten und zweiten Kühlmittelkreislauf ausgebildet ist, kann sowohl Wärme von dem den Luft-Flüssigkeit-Wärmetauscher durchströmenden Abluftstrom auf den ersten Pufferspeicher bzw. den zweiten Pufferspeicher oder Wärmeenergie von dem ersten Pufferspeicher bzw. dem zweiten Pufferspeicher auf den Abluftstrom übertragen werden. Mit der Umschaltmöglichkeit zwischen den beiden Kühlmittelkreisläufen und der reversibel arbeitenden Wärmepumpe können dabei alternierend der erste und zweite Pufferspeicher entladen werden. Ebenso können auch beide Pufferspeicher alternierend beladen werden. Weiterhin ist es auch möglich, dass alternierend einer der beiden Pufferspeicher entladen und der andere Pufferspeicher beladen wird. Über die zweite Bypassanordnung wird für den zweiten Heizbetriebsmodus bzw. den zweiten Kühlbetriebsmodus ein Mischen des Abluft- und des Außenluftströms zum Mischluftstrom ermöglicht. Die erste Bypassanordnung ermöglicht ein Vorbeiführen der Abluft am Luft-Flüssigkeit-Wärmetauscher und eines optional vor dem Flüssigkeitswärmetauscher vorhandenen Luftfilters, sodass der Energiesparmodus realisiert wird. Da sowohl der erste Pufferspeicher, als auch der zweite Pufferspeicher als Wärmespeicher und als Kältespeicher betreibbar sind, kann beispielsweise in einer Übergangszeit (Frühlung oder Herbst) je nach Bedarf Wärmeenergie aus dem ersten Pufferspeicher (als Wärmespeicher) über die Temperiervorrichtung an das Gebäude oder Wärmeenergie aus dem Gebäude über die Temperiervorrichtung an den zweiten Pufferspeicher (als Kältespeicher) transferiert werden. Hierzu wird die Wärmpumpenanordnung auf den ersten oder den zweiten Kühlmittelkreislauf geschaltet. Selbstverständlich können bei einem erhöhten Bedarf an Wärme bzw. Kälte (Winter, Sommer) auch beide Pufferspeicher als Wärmespeicher oder beide Pufferspeicher als Kältespeicher betrieben werden. Die Temperiervorrichtung besteht aus mehreren lokalen Temperiereinheiten, die jeweils in einzelnen Räumen des Gebäudes angeordnet sind. Sind nun die Temperiereinheiten jeweils mit dem ersten und dem zweiten Pufferspeicher (Vierleiterprinzip) verbunden, können diese Räume separat temperiert, indem diesen Wärme entzogen oder zugeführt werden.

Eine Ausführung sieht vor, dass der Luft-Flüssigkeit-Wärmetauscher von einem Wärmetauschergehäuse umgeben ist und dass dieses Wärmetauschergehäuse einen Abluftstromanschluss, einen Fortluftstromanschluss, einen ersten Kühlmittelanschluss der Wärmepumpenanordnung, einen zweiten Kühlmittelanschluss der Wärmepumpenanordnung und einen Außenluftanschluss aufweist und dass die zweite Bypassanordnung als eine den Außenluftanschluss regelbare Verschlusseinrichtung ausgebildet ist. Der erste und der zweite Kühlmittelanschluss sind mit Kühlmittelleitungen verbunden, die zum Luft-Flüssigkeit-Wärmetauscher führen. Zum Schutz des Luft-Flüssigkeit-Wärmetauschers vor Verschmutzung kann vor diesem ein Luftfilter installiert sein.

In einer Ausgestaltung ist die Verschlusseinrichtung eine Verschlussklappe, wobei diese einen Querschnitt des Außenluftanschlusses verengend ausgebildet ist. Damit ist der Querschnitt des Außenluftanschlusses regelbar, sodass je nach Stellung der Verschlussklappe der Anteil der dem Abluftstrom beigemischten Außenluft eingestellt werden kann Das Mischungsverhältnis ergibt sich dabei im Wesentlichen aus dem Verhältnis aus dem Strömungsquerschnitt am Abluftstromanschluss und dem Strömungsquerschnitt am Außenluftanschluss. Die Verschlusseinrichtung kann dabei so ausgestaltet sein, dass ein festes Verhältnis oder ein mehrstufiges Verhältnis eingestellt werden kann.

In einer Ausführung ist der Abluftstrom in einem in dem Wärmetauschergehäuse angeordneten und den Luft-Flüssigkeit-Wärmetauscher umgehenden Bypasskanal zum Außenluftanschluss führbar.

Im Falle eines Brandes kann damit ein Brandgase führender Abluftstrom direkt aus dem Gebäude abgeführt werden.

In einer weiteren Ausgestaltung ist die erste Bypassanordnung als ein in dem Wärmetauschergehäuse angeordneter und verschließbarer Kanal zwischen dem Abluftstromanschluss und dem Fortluftstromanschluss ausgebildet.

Eine weitere Ausgestaltung sieht vor, dass die Temperiervorrichtung ein Umluftgerät oder ein Bodeneinbaugerät oder ein Heiz-Kühldeckensegel oder eine Wandtemperiervorrichtung oder eine Fußbodentemperiervorrichtung oder ein Wärmetauscher eines Zuluftgerätes oder eine Kombination aus diesen ist.

In einer Ausgestaltung ist der Zuluftstrom über einen Außenluftdurchlass oder über ein Zuluftgerät dem Gebäude zuführbar, wobei im Falle des Zuluftgerätes ein den Zuluftstrom temperierender Luft-Flüssigkeit-Wärmetauscher des Zuluftgerätes über einen weiteren Flüssigkeitskreislauf mit dem ersten und/oder dem zweiten Pufferspeicher verbunden ist.

Mit dem im Zuluftgerät integrierten Luft-Flüssigkeit-Wärmetauscher kann damit Wärme auf den Zuluftstrom übertragen oder diesem Wärme entzogen werden. Weiterhin kann dieses Zuluftgerät mit einem Bypass ausgestattet sein, der den Zuluftstrom im Bedarfsfall an dem Zuluftwärmetauscher vorbeiführt. Dies ist insbesondere sinnvoll, wenn im Zuluftgerät kein Wärmetransfer am Zuluftstrom notwendig ist und der Zuluftwärmetauscher dann umgangen werden kann, sodass aufgrund der geringeren Druckverluste beim Umgehen des Zuluftwärmetauschers der Zuluftstrom dem Gebäude energieeffizienter zugeführt werden kann.

Es wird vorgeschlagen, dass die Temperiervorrichtung in einem Zuluftstrom des Gebäudes angeordnet ist.

Wird Außenluft direkt als Zuluft dem Gebäude zugeführt, entfällt ein zentrales Zuluftgerät mit Ventilator und Luft-Luft-Wärmetauscher. Eine Temperierung der Luft im Gebäude wird dann mithilfe der Temperiervorrichtung erreicht. Durch eine Anordnung der Temperiervorrichtung im Zuluftstrom kann dann der aus untemperierter Außenluft bestehende Zuluftstrom temperiert werden, wobei entweder Wärmeenergie aus einem der Pufferspeicher auf den Zuluftstrom oder Wärmeenergie des Zuluftstroms auf einen der Pufferspeicher übertragen wird.

Wird die Zuluft über das Zuluftgerät zugeführt, kann diese im Zuluftgerät bereits vortemperiert werden. Über die Temperiervorrichtung kann dann die Zuluft weiter temperiert werden, wobei beispielsweise eine bereits im Zuluftgerät vorgewärmte Zuluft dann mithilfe der Temperiervorrichtung weiter erwärmt werden kann. Eine bereits im Zuluftgerät vorgekühlte Zuluft kann beispielsweise weiter abgekühlt werden. Sind die Temperiereinheiten der Temperiervorrichtung wie zuvor beschrieben im Vierleiterprinzip mit dem Wärmespeicher und dem Kältespeicher verbunden, so kann die weitere Temperierung der bereits im Zuluftgerät vorgewärmten bzw. vorgekühlten Zuluft separat für jeden Raum des Gebäudes, in dem eine Temperiereinheit angeordnet ist, separat weiter temperiert werden. Zur Temperierung der Zuluft im Zuluftgerät können ebenfalls die Pufferspeicher genutzt werden, wobei hierfür dann ebenfalls Flüssigkeitskreisläufe zwischen dem Wärmetauscher des Zuluftgerätes und den Pufferspeichern ausgebildet sind.

Weiterhin wird vorgeschlagen, dass ein Verdichter und eine Drossel der Wärmepumpenanordnung außerhalb oder innerhalb des Wärmetauschergehäuses angeordnet sind.

In einer vorteilhaften Ausgestaltung sind das Wärmetauschergehäuse und/oder die Wärmepumpenanordnung und/oder das Zuluftgerät und/oder die Pufferspeicher in einem Gehäuse angeordnet und damit als eine Geräteeinheit ausgestaltet.

Nachfolgend wird ein Ausführungsbeispiel der Erfindung anhand der Zeichnungen erläutert. Es zeigen:
- Fig. 1a: ein Blockschema eines ersten Heizbetriebsmodus des erfindungsgemäßen Verfahrens
- Fig. 1b: ein Blockschema eines zweiten Heizbetriebsmodus des erfindungsgemäßen Verfahrens
- Fig. 1c: ein Blockschema eines ersten Kühlbetriebsmodus des erfindungsgemäßen Verfahrens
- Fig. 1d: ein Blockschema eines zweiten Kühlbetriebsmodus des erfindungsgemäßen Verfahrens
- Fig. 2: eine Ausführung einer Vorrichtung zur Durchführung des erfindungsgemäßen Verfahrens

Das erfindungsgemäße Verfahren umfasst sechs Betriebsarten - einen ersten Heizbetriebsmodus, einen zweiten Heizbetriebsmodus, einen ersten Kühlbetriebsmodus, einen zweiten Kühlbetriebsmodus, einen Komfortmodus und einen Energiesparmodus.

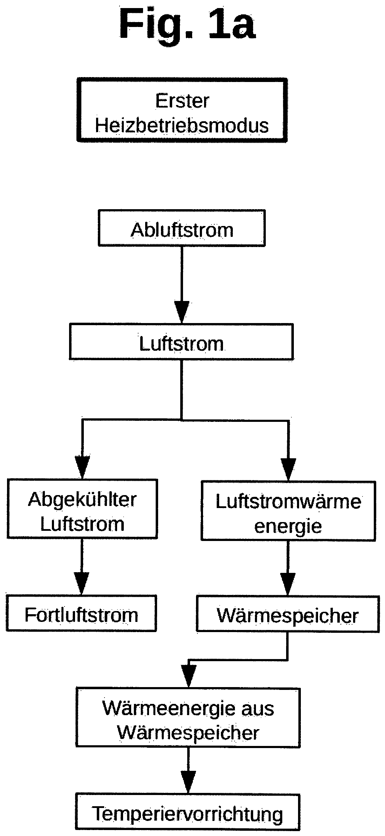

**Fig. 1a** zeigt ein Blockschema des ersten Heizbetriebsmodus. In diesem ersten Heizbetriebsmodus wird Luftstromwärmenergie eines Abluftstroms eines Gebäudes auf einen Wärmespeicher übertragen und dieser Abluftstrom anschließend als Fortluftstrom abgeführt. Im Bedarfsfall wird dann Wärmeenergie vom Wärmespeicher als Gebäudewärmeenergie an das Gebäude übertragen.

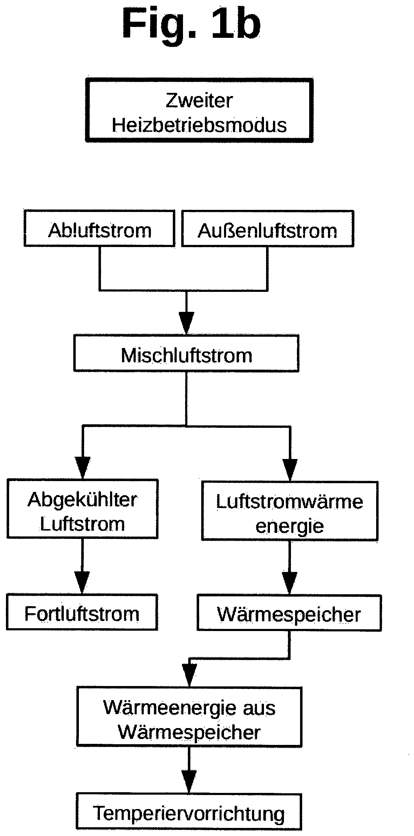

In **Fig. 1b** ist ein Blockschema des erstes Kühlbetriebsmodus gezeigt. Dieser zeichnet sich dadurch aus, dass Wärmeenergie aus einem Kältespeicher auf einen Abluftstrom übertragen und dieser Abluftstrom anschließend als Fortluftstrom abgeführt wird. Hier wird im Bedarfsfall Gebäudewärmeenergie des Gebäudes auf den Kältespeicher übertragen.

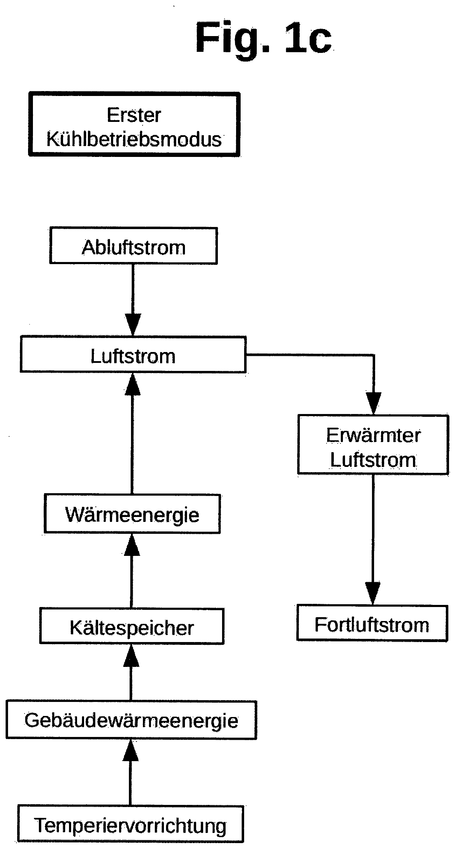

In dem zweiten Heizbetriebsmodus (siehe Blockschema in **Fig. 1c**) wird ein Abluftstrom des Gebäudes mit einem Außenluftstrom zu einem Mischluftstrom gemischt und Luftstromwärmeenergie dieses Mischluftstroms in einen Wärmespeicher überführt. Anschließend wird der Mischluftstrom als Fortluftstrom abgeführt. Im Bedarfsfall wird dann Wärmeenergie vom Wärmespeicher als Gebäudewärmeenergie an das Gebäude übertragen.

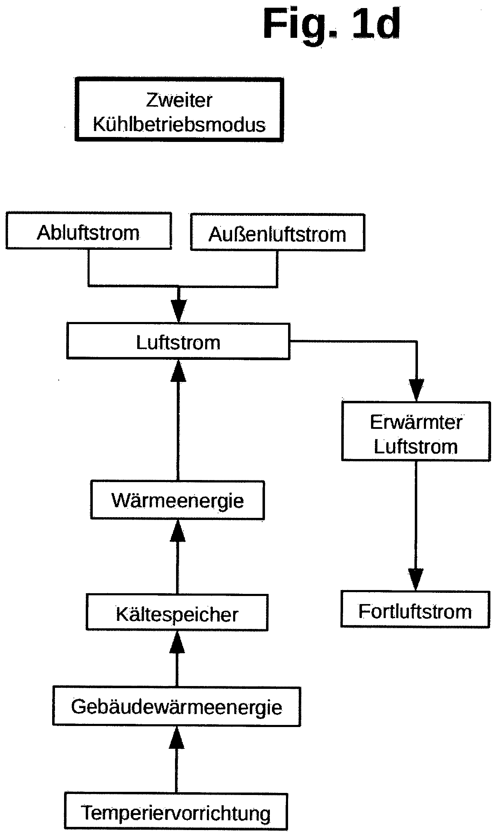

Der im Blockschema in **Fig. 1d** dargestellte zweite Kühlbetriebsmodus zeichnet sich dadurch aus, dass ein Abluftstrom des Gebäudes mit einem Außenluftstrom zu einem Mischluftstrom gemischt und Wärmeenergie aus einem Kältespeicher auf diesen Mischluftstrom übertragen wird, wobei anschließend der Mischluftstrom als Fortluftstrom abgeführt wird. Im Bedarfsfall wird Gebäudewärmeenergie aus dem Gebäude auf den Kältespeicher übertragen.

Ein Umschalten zwischen diesen Betriebsmodi kann dabei beispielsweise mit üblicher Steuer- und Regeltechnik erfolgen, wobei als Steuer- bzw. Regelgrößen insbesondere die Temperaturen der Abluft und der Außenluft sowie eine gewünschte Gebäudelufttemperatur genutzt werden können. Ebenso kann eine Kombination aus Temperatur und Feuchtigkeit der Abluft und/oder Außenluft als Steuer- und Regelgröße dienen.

Sowohl im ersten Heizbetriebsmodus, als auch im zweiten Heizbetriebsmodus kann die Gebäudewärmeenergie auf einen Zuluftstrom des Gebäudes übertragen werden. Ebenso können im ersten Kühlbetriebsmodus und im zweiten Kühlbetriebsmodus Zuluftwärmeenergie eines Zuluftstroms des Gebäudes auf den Kältespeicher übertragen werden. Allerdings ist dies nicht zwingend. Es ist beispielsweise ebenso möglich, die Gebäudewärmeenergie direkt an bereits im Gebäude befindliche Gebäudeluft bzw. die Wärmeenergie der bereits im Gebäude befindlichen Gebäudeluft an den Kältspeicher zu übertragen. Selbstverständlich können diese Ausführungen aber auch miteinander kombiniert werden.

Bei dem Komfortmodus wird alternierend Luftstromwärmeenergie von einem Abluftstrom des Gebäudes auf einen Wärmespeicher und Wärmeenergie eines Kältespeichers auf den Abluftstrom übertragen. Anschließend wird dieser Abluftstrom als Fortluftstrom abgeführt. Im Bedarfsfall können dann Wärmeenergie aus dem Wärmespeicher als Gebäudewärmeenergie dem Gebäude zugeführt und/oder Gebäudewärmeenergie dem Kältespeicher zugeführt werden. In diesem Komfortmodus wird in einer Variante dem Abluftstrom vor der Übertragung der Luftstromwärmeenergie auf den Wärmespeicher bzw. vor der Übertragung der Wärmeenergie des Kältespeichers auf den Abluftstrom ein Außenluftstrom beigemischt, wobei dieser Außenluftstrom anschließend zusammen mit dem Abluftstrom als Fortluftstrom abgeführt wird.

In dem Energiesparmodus wird der Abluftstrom direkt als Fortluftstrom abgeführt. Eine Übertragung von Wärmeenergie des Abluftstroms auf den Wärmespeicher bzw. von Wärmeenergie aus dem Kältespeicher auf den Abluftstrom ist hier nicht vorgesehen.

Bei dem zweiten Kühlbetriebsmodus, dem zweiten Heizbetriebsmodus sowie dem Komfortmodus können beim Mischen des Abluftstroms mit dem Außenluftstrom die Anteile des Abluftstroms und des Außenluftstroms variiert werden. Eine Regelung des Mischungsverhältnisses zwischen Abluftstrommenge und Außenluftstrommenge kann dabei beispielsweise anhand des Temperaturunterschieds zwischen Abluft und Außenluft erfolgen.

Als weiterer Betriebsmodus kann das erfindungsgemäße Verfahren einen Brandmodus aufweisen. Bei diesem Brandmodus wird ein Rauchgase führender Abluftstrom des Gebäudes direkt an die Außenluft abgeführt.

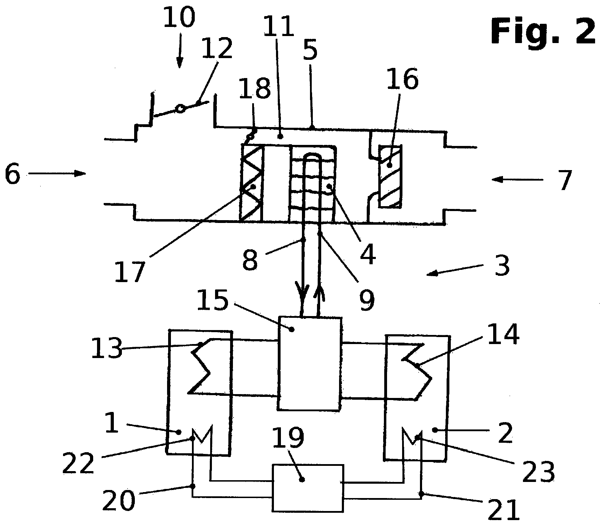

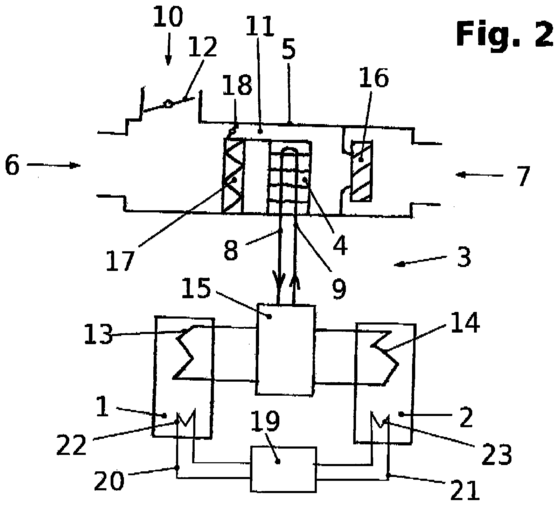

In **Fig. 2** ist eine Vorrichtung zur Durchführung des erfindungsgemäßen Verfahrens für die Klimatisierung eines Gebäudes dargestellt. Diese Vorrichtung weist einen ersten Pufferspeicher 1, einen zweiten Pufferspeicher 2, eine reversibel arbeitende Wärmepumpenanordnung 3 und einen Luft-Flüssigkeit-Wärmetauscher 4 auf. Der Luft-Flüssigkeit-Wärmetauscher 4 ist von einem Wärmetauschergehäuse 5 umgeben, wobei dieses Wärmetauschergehäuse 5 einen Abluftstromanschluss 6, einen Fortluftstromanschluss 7, einen ersten Kühlmittelanschluss 8 der Wärmepumpenanordnung 3, einen zweiten Kühlmittelanschluss 9 der Wärmepumpenanordnung 3 und einen Außenluftanschluss 10 aufweist. Innerhalb des Wärmetauschergehäuses 5 ist eine erste Bypassanordnung 11 und eine zweite Bypassanordnung 12 angeordnet, wobei die zweite Bypassanordnung 12 eine den Außenluftanschluss 10 regelbare Verschlusseinrichtung ist. In der dargestellten Ausführung ist die Verschlusseinrichtung als eine Verschlussklappe ausgebildet, die einen Querschnitt des Außenluftanschlusses 10 verengen kann. Mit dieser zweiten Bypassanordnung 12 kann einem am Abluftstromanschluss 6 eintretenden Abluftstrom ein über den Außenluftanschluss 10 eintretender Außenluftstrom beigemischt werden, wobei mithilfe der Verschlusseinrichtung das Mischungsverhältniss zwischen Abluft und Außenluft eingestellt werden kann. Im Extremfall schließt die Verschlusseinrichtung den Außenluftanschluss 10 vollständig, sodass der Abluft keine Außenluft beigemischt wird.

Ein erster Kühlmittelkreislauf wird von einem Verdichter und einer Drossel der Wärmepumpenanordnung 3, dem Luft-Flüssigkeit-Wärmetauscher 4 und einem ersten Flüssigkeit-Flüssigkeit-Wärmetauscher 13 im ersten Pufferspeicher 1 über entsprechende Zu- und Ablaufleitungen gebildet. Ein zweiter Kühlmittelkreislauf erfolgt über den Verdichter, die Drossel, den Luft-Flüssigkeit-Wärmetauscher 4 und einen zweiten Flüssigkeit-Flüssigkeit-Wärmetauscher 14 in dem zweiten Pufferspeicher 2. Die Flüssigkeit-Flüssigkeit-Wärmetauscher 13, 14 in den beiden Pufferspeichern 1, 2 und der Luft-Flüssigkeit-Wärmetauscher sind im Sinne der reversiblen Wärmepumpenanordnung 3 sowohl als Verdampfer, als auch als Kondensator betreibbar. Die Wärmepumpenanordnung 3 ist dabei so ausgebildet, dass diese mit einer Umschaltvorrichtung zwischen dem ersten Kühlmittelkreislauf und dem zweiten Kühlmittelkreislauf umschaltbar ist. Beide Pufferspeicher 1, 2 sind sowohl als Wärmespeicher, als auch als Kältespeicher betreibbar. Der Verdichter, die Drossel und die Umschaltvorrichtung sind in der dargestellten Ausführung in einem Wärmepumpengehäuse 15 untergebracht und nicht sichtbar.

Der Luft-Flüssigkeit-Wärmetauscher 4 ist so innerhalb des Wärmetauschergehäuses 5 angeordnet, dass der Abluftstrom über diesen Luft-Flüssigkeit-Wärmetauscher 4 geführt und als Fortluftstrom über den Fortluftstromanschluss 7 aus dem Wärmetauschergehäuses 5 herausgeführt werden kann. Der Abluftstrom wird dabei mit einem im Wärmetauschergehäuse 5 angeordneten Ventilator 16 vom Abluftstromanschluss 6 zum Fortluftstromanschluss 7 geführt. Der Ventilator 16 muss allerdings nicht zwingend im Wärmetauschergehäuse 5 angeordnet sein. Ebenso kann dieser beispielsweise auch am Fortluftstromanschluss 7 angebracht sein. Vor dem Luft-Flüssigkeit-Wärmetauscher 4 ist ein Luftfilter 17 angeordnet, der die Abluft vor dem Durchströmen des Luft-Flüssigkeit-Wärmetauscher 4 reinigt.

Weiterhin kann die Abluft über die erste Bypassanordnung 11 auch am Luft-Flüssigkeit-Wärmetauscher 4 vorbeigeführt und direkt als Fortluftstrom über der Fortluftstromanschluss 7 aus dem Wärmetauschergehäuse 5 herausgeführt werden. Hierzu ist die erste Bypassanordnung 11 im Wärmetauschergehäuse 5 als Bypasskanal ausgebildet, der von einem regelbaren Verschlusselement 18 verschließbar ist. Das Verschlusselement 18 ist in der dargestellten Variante als eine Klappe ausgebildet, ohne dass das Verschlusselement 18 hierauf beschränkt ist.

Der erste und der zweite Pufferspeicher 1, 2 sind mit einer Temperiervorrichtung 19 des Gebäudes verbunden. Hierfür sind an beiden Pufferspeichern Anschlüsse für die Temperiervorrichtung 19 vorgesehen. Die Temperiervorrichtung 19 kann dabei ein Umluftgerät oder ein Bodeneinbaugerät oder ein Heiz-Kühldeckensegel oder eine Wandtemperiervorrichtung oder eine Fußbodentemperiervorrichtung oder eine Kombination aus diesen ist. Zur Wärmeübertragung zwischen der Temperiervorrichtung 19 und den Pufferspeicher 1, 2 kann ein in den Pufferspeichern 1, 2 befindliches Wärmeträgermedium direkt an die Temperiervorrichtung 19 übertragen werden. Ebenso können die Temperiervorrichtung 19 und die Pufferspeicher 1, 2 auch über weitere Kühlmittelkreisläufe 20, 21 miteinander verbunden, wobei dann in den Pufferspeichern 1, 2 weitere Wärmetauscher 22, 23 angeordnet sind, die die Wärme vom Wärmeträgermedium der Pufferspeicher 1, 2 auf ein Kühlmittel dieser Kühlmittelkreisläufe 20, 21 übertragen.

In der dargestellten Ausführung sind der Verdichter und die Drossel der Wärmepumpenanordnung 3 außerhalb des Wärmetauschergehäuses 5 angeordnet. Ebenso können diese aber auch innerhalb des Wärmetauschergehäuses 5 angeordnet sein können.

Die oben aufgeführten Betriebsmodi sind mit dieser Vorrichtung dabei wie folgt realisierbar. Für den ersten Heizbetriebsmodus wird der Abluftstrom des Gebäudes über den Abluftstromanschluss 6 in das Wärmetauschergehäuse 5 hineingeführt. Die erste und die zweite Bypassanordnung 11, 12 sind geschlossen. Damit wird der Abluftstrom vom Ventilator 16 durch den Luftfilter 17 und anschließend durch den Luft-Flüssigkeit-Wärmetauscher 4 geführt. Am Luft-Flüssigkeit-Wärmetauscher 4 wird die Luftstromwärmeenergie auf einen der beiden Kühlmittelkreisläufe übertragen. Dabei wird der Abluftstrom abgekühlt und anschließend als Fortluftstrom über den Fortlustromanschluss 7 aus dem Wärmetauschergehäuse 5 herausgeführt. Die auf den ersten bzw. zweiten Kühlmittelkreislauf übertragene Wärmeenergie wird dann auf den zugeordneten Pufferspeicher 1, 2 übertragen. Die Wärmepumpenanordnung 3 kann dabei so zwischen den beiden Kühlmittelkreisläufen hin und her geschaltet werden, dass die Wärmeenergie auf beide Pufferspeicher 1, 2 übertragen wird. Ebenso kann die Wärmeenergie aber auch nur auf einen der beiden Pufferspeicher 1, 2 übertragen werden oder erst ein Pufferspeicher 1 vollständig und anschließend der andere Pufferspeicher 2 beladen werden. Im ersten Heizbetriebsmodus arbeiten beide bzw. einer der beiden Pufferspeicher 1, 2 als Wärmespeicher. Im Bedarfsfall wird dann Wärmeenergie von einem der beiden Pufferspeicher 1, 2 bzw. von beiden Pufferspeichern 1, 2 als Gebäudewärmeenergie an die Temperiervorrichtung 19 im Gebäude übertragen.

Für den zweiten Heizbetriebsmodus wird nun ausgehend vom ersten Heizbetriebsmodus die Verschlusseinrichtung der zweiten Bypassanordnung 12 geöffnet, sodass der Abluft, bevor diese den Luft-Flüssigkeit-Wärmetauscher 4 erreicht, Außenluft beigemischt wird. Dieser Mischluftstrom aus Abluft und Außenluft wird dann analog zum Abluftstrom im ersten Heizbetriebsmodus vom Ventilator 16 über den Luftfilter 17 zum Luft-Flüssigkeit-Wärmetauscher 4 geführt, wo die mitgeführte Luftstromwärmeenergie wie zuvor beschrieben . auf einen oder beide Pufferspeicher 1, 2 übertragen wird. Die erste Bypassanordnung 11 ist auch im zweiten Heizbetriebsmodus geschlossen.

Zum Ausführen des ersten Kühlbetriebsmodus sind sowohl die erste, als auch die zweite Bypassanordnung 11, 12 in diesem Betriebsmodus geschlossen. Der Abluftstrom wird über den Abluftstromanschluss 6 in das Wärmetauschergehäuse 5 hineingeführt und von dem Ventilator 16 über den Luftfilter 17 zum Luft-Flüssigkeit-Wärmetauscher 4 gesaugt. Innerhalb des Luft-Flüssigkeit-Wärmetauscher 4 wird dann Wärmeenergie, die mit dem ersten oder dem zweiten Kühlmittelkreislauf vom ersten Pufferspeicher 1 bzw. vom zweiten Pufferspeicher 2 dem Luft-Flüssigkeit-Wärmetauscher 4 zugeführt wurde, an die Abluft übertragen. Die Abluft wird dabei erwärmt. Anschließend wird die Abluft vom Ventilator 16 zum Fortluftstromanschluss 7 und dann als Fortluft aus dem Wärmetauschergehäuse 5 herausgeführt. Damit werden der erste oder der zweite oder beide Pufferspeicher 1, 2 abgekühlt und stehen als Wärmesenke zur Verfügung. Im Bedarfsfall kann dann Gebäudewärmeenergie des Gebäudes über die Temperiervorrichtung 19 auf einen der oder die Pufferpeicher 1, 2 übertragen werden.

Ausgehend vom ersten Kühlbetriebsmodus wird für den zweiten Kühlbetriebsmodus die Verschlusseinrichtung der zweiten Bypassanordnung 12 geöffnet. Damit wird dem Abluftstrom Außenluft beigemischt und dieses Gemisch als Mischluftstrom zum Luft-Flüssigkeit-Wärmetauscher 4 geführt, wobei wie im ersten Kühlbetriebsmodus hier Wärmeenergie von einem der beiden Pufferspeicher 1, 2 oder beiden Pufferspeichern 1, 2 auf den Mischluftstrom übertragen wird, sodass dieser erwärmt und dann als Fortluft über den Fortiuftstromanschluss 7 aus dem Wärmetauschergehäuse 5 herausgeführt wird.

Für den Energiesparmodus wird die als verschließbarer Kanal zwischen dem Abluftstromanschluss 6 und dem Fortluftstromanschluss 7 ausgebildete erste Bypassanordnung 11 geöffnet, sodass der Abluftstrom unter Umgehung des Luft-Flüssigkeit-Wärmetauscher 4 direkt als Fortluftstrom über den Fortluftstromanschluss 7 abgeführt wird.

Der Komfortmodus kann über die Ausführung mit zwei Pufferspeichern 1, 2 erreicht werden. Hierfür werden der erste Pufferspeicher 1 als Wärmespeicher und der zweite Pufferspeicher 2 als Kältespeicher verwendet. Zur Übertragung von Wärmeenergie des Abluftstroms bzw. des Mischluftstroms auf den ersten Pufferspeicher 1 wird die Wärmepumpenanordnung 3 auf den ersten Kühlmittelkreislauf geschaltet. Zur Abführung von Wärmeenergie aus dem zweiten Pufferspeicher 2 wird die Wärmepumpenanordnung 3 auf den zweiten Kühlmittelkreislauf geschaltet, sodass die Wärmeenergie aus dem zweiten Pufferspeicher 2 über den Luft-Flüssigkeit-Wärmetauscher 4 auf den Abluft- bzw. Mischluftstrom transferiert wird.

Die Temperiervorrichtung 19 besteht aus einzelnen (nicht dargestellten) Temperiereinheiten, wobei diese in einzelnen Räumen des Gebäudes angeordnet sind. Jede Temperiereinheit ist dabei jeweils mit dem ersten und dem zweiten Pufferspeicher 1, 2 verbunden. Die einzelnen Temperiereinheiten sind nicht gezeigt. Ein Zuluftstrom wird über ein zentrales Zuluftgerät dem Gebäude zugeführt und in Teilströme aufgeteilt, welche in die einzelnen Räume geleitet werden. In dem (nicht dargestellten) Zuluftgerät wird die Zuluft bereits vortemperiert. Die damit ebenfalls vortemperierten Teilströme werden nun in den Räumen über die darin angeordneten Temperiereinheiten geführt, wobei je nach Wunschtemperatur im jeweiligen Raum dessen Teilstrom gekühlt oder erwärmt werden kann. Damit ist die Zuluft raumweise individuell einstellbar. Grundsätzlich ist eine Vortemperierung des Zuluftstroms im Zuluftgerät aber nicht zwingend. Ebenso kann die Zuluft auch untemperiert in die Räume geleitet werden, wobei dann die Temperierung der Teilströme dann alleinig über die Temperiervorrichtung 19 erfolgt.

Im Falle eines Brandes im Gebäude wird die Abluft auch Brandgase mitführen, die aus dem Gebäude heraus geführt werden müssen. Hierfür wird im Brandmodus die die Brandgase mitführende Abluft über den Abluftstromanschluss 6 in das Wärmetauschergehäuse 5 hineingeführt. Die Verschlusseinrichtung der zweiten Bypassanordnung 12 ist dann geöffnet, sodass der die Brandgase mitführende Abluftstrom über den Außenluftanschluss 10 aus dem Wärmetauschergehäuse 5 herausgeführt wird. Der Ventilator 16 ist dabei abgeschaltet und der erste Bypasskanal 11 ist verschlossen. Je nach Strömungsverhältnissen kann am Außenluftanschluss 10 ein weiterer Ventilator zum Abführen der Abluft vorgesehen sein.

Das vorgeschlagene Verfahren und die vorgeschlagene Vorrichtung können neben der Klimatisierung von Gebäuden grundsätzlich auch zur Warmwasseraufbereitung eines Gebäudes genutzt werden. Hierfür ist die Temperiervorrichtung entsprechend für eine Warmwasseraufbereitung ausgelegt.

### Bezugszeichenliste

- 1: Pufferspeicher
- 2: Pufferspeicher
- 3: Wärmepumpenanordnung
- 4: Luft-Flüssigkeit-Wärmetauscher
- 5: Wärmetauschergehäuse
- 6: Abluftstromanschluss
- 7: Fortluftstromanschluss
- 8: Kühlmittelanschluss
- 9: Kühlmittelanschluss
- 10: Außenluftanschluss
- 11: Bypasskanal
- 12: Verschlusseinrichtung
- 13: Flüssigkeit-Flüssigkeit-Wärmetauscher
- 14: Flüssigkeit-Flüssigkeit-Wärmetauscher
- 15: Wärmepumpengehäuse
- 16: Ventilator
- 17: Luftfilter
- 18: Verschlusseinrichtung
- 19: Temperiervorrichtung
- 20: Kühlmittelkreislauf
- 21: Kühlmittelkreislauf
- 22: Wärmetauscher
- 23: Wärmetauscher

## Patentansprüche

1. Verfahren zur Klimatisierung eines Gebäudes, wobei in einem ersten Heizbetriebsmodus Luftstromwärmenergie eines Abluftstroms des Gebäudes auf einen Wärmespeicher übertragen wird und dieser Abluftstrom anschließend als Fortluftstrom abgeführt wird und im Bedarfsfall Wärmeenergie vom Wärmespeicher als Gebäudewärmeenergie an das Gebäude übertragen wird und wobei in einem ersten Kühlbetriebsmodus Wärmeenergie aus einem Kältespeicher auf den Abluftstrom des Gebäudes übertragen wird und dieser Abluftstrom anschließend als Fortluftstrom abgeführt wird und im Bedarfsfall Gebäudewärmeenergie des Gebäudes auf den Kältespeicher übertragen wird und wobei in einem zweiten Heizbetriebsmodus der Abluftstrom des Gebäudes mit dem Außenluftstrom zu einem Mischluftstrom gemischt und Luftstromwärmeenergie dieses Mischluftstroms in den Wärmespeicher überführt wird und der Mischluftstrom anschließend als Fortluftstrom abgeführt wird und im Bedarfsfall Wärmeenergie vom Wärmespeicher als Gebäudewärmeenergie an das Gebäude übertragen wird und wobei in einem zweiten Kühlbetriebsmodus der Abluftstrom des Gebäudes mit dem Außenluftstrom zu einem Mischluftstrom gemischt und Wärmeenergie aus dem Kältespeicher auf diesen Mischluftstrom übertragen wird und der Mischluftstrom anschließend als Fortluftstrom abgeführt wird und im Bedarfsfall Gebäudewärmeenergie aus dem Gebäude auf den Kältespeicher übertragen wird und wobei in einem Komfortmodus alternierend Luftstromwärmeenergie von dem Abluftstrom des Gebäudes auf den Wärmespeicher und Wärmeenergie des Kältespeichers auf den Abluftstrom übertragen werden und dieser Abluftstrom als Fortluftstrom abgeführt wird und im Bedarfsfall Wärmeenergie aus dem Wärmespeicher als Gebäudewärmeenergie dem Gebäude zugeführt und/oder Gebäudewärmeenergie aus dem Gebäude dem Kältespeicher zugeführt werden und wobei in einem Energiesparmodus der Abluftstrom direkt als Fortluftstrom abgeführt wird.

2. Verfahren nach Anspruch 1, **dadurch gekennzeichnet, dass** dem Abluftstrom vor der Übertragung der Luftstromwärmeenergie auf den Wärmespeicher bzw. vor der Übertragung der Wärmeenergie des Kältespeichers auf den Abluftstrom der Außenluftstrom beigemischt wird und dieser anschließend mit dem Abluftstrom als Fortluftstrom abgeführt wird.

3. Verfahren nach Anspruch 1 oder 2, **dadurch gekennzeichnet, dass** beim Mischen des Abluftstroms mit dem Außenluftstrom die Anteile des Abluftstroms und des Außenluftstroms variiert werden.

4. Verfahren nach Anspruch 1, **dadurch gekennzeichnet, dass** in einem Brandmodus ein Rauchgase führender Abluftstrom des Gebäudes an die Außenluft abgeführt wird.

5. Verfahren nach Anspruch 1 oder 2, **dadurch gekennzeichnet, dass** dem Gebäude untemperierte oder temperierte Außenluft als Zuluftstrom zugeführt wird.

6. Verfahren nach Anspruch 5, **dadurch gekennzeichnet, dass** im ersten Heizbetriebsmodus und im zweiten Heizbetriebsmodus zumindest ein Teil der Gebäudewärmeenergie aus dem Wärmespeicher auf den Zuluftstrom des Gebäudes übertragen wird.

7. Verfahren nach Anspruch 5, **dadurch gekennzeichnet, dass** im ersten Kühlbetriebsmodus und im zweiten Kühlbetriebsmodus Zuluftwärmeenergie des Zuluftstroms des Gebäudes auf den Kältespeicher übertragen wird.

8. Gebäude mit einer Vorrichtung zur Klimatisierung des Gebäudes, wobei die Vorrichtung einen ersten Pufferspeicher (1), einen zweiten Pufferspeicher (2), eine reversibel arbeitende Wärmepumpenanordnung (3), einen Luft-Flüssigkeit-Wärmetauscher (4), einen im ersten Pufferspeicher (1) angeordneten ersten Flüssigkeit-Flüssigkeit-Wärmetauscher (13) und einen im zweiten Pufferspeicher (2) angeordneten zweiten Flüssigkeit-Flüssigkeit-Wärmetauscher (14) aufweist und die Wärmepumpenanordnung (3) umschaltbar einen ersten Kühlmittelkreislauf zwischen dem ersten Flüssigkeit-Flüssigkeit-Wärmetauscher (13) und dem Luft-Flüssigkeit-Wärmetauscher (4) und einen zweiten Kühlmittelkreislauf zwischen dem zweiten Flüssigkeit-Flüssigkeit-Wärmetauscher (14) und dem Luft-Flüssigkeit-Wärmetauscher (4) bildet und wobei der erste Pufferspeicher (1) und der zweite Pufferspeicher (2) mit einer in dem Gebäude angeordneten Temperiervorrichtung (19) verbunden sind, **dadurch gekennzeichnet, dass** ein Abluftstrom des Gebäudes mit einer Umlenkvorrichtung durch den Luft-Flüssigkeit-Wärmetauscher (4) oder entlang einer den Luft-Flüssigkeit-Wärmetauscher (4) umgehenden ersten Bypassanordnung (11) führbar ist und dass ein Außenluftstrom über eine zweite Bypassanordnung (12) dem Abluftstrom beimischbar ist und dass die beiden Pufferspeicher (1, 2) als Wärmespeicher und Kältespeicher betreibbar sind und dass die Temperiervorrichtung (19) aus lokalen Temperiereinheiten besteht und dass diese Temperiereinheiten in einzelnen Räumen des Gebäudes angeordnet sind und dass die Temperiereinheiten jeweils mit dem ersten und dem zweiten Pufferspeicher (1, 2) verbunden sind.

9. Vorrichtung nach Anspruch 8, **dadurch gekennzeichnet, dass** der Luft-Flüssigkeit-Wärmetauscher (4) von einem Wärmetauschergehäuse (5) umgeben ist und dass dieses Wärmetauschergehäuse (5) einen Abluftstromanschluss (6), einen Fortluftstromanschluss (7), einen ersten Kühlmittelanschluss (8) der Wärmepumpenanordnung (3), einen zweiten Kühlmittelanschluss (9) der Wärmepumpenanordnung (3) und einen Außenluftanschluss (10) aufweist und dass die zweite Bypassanordnung (12) als eine den Außenluftanschluss (10) regelbare Verschlusseinrichtung ausgebildet ist.

10. Vorrichtung nach Anspruch 9, **dadurch gekennzeichnet, dass** die Verschlusseinrichtung eine Verschlussklappe ist und diese Verschlussklappe einen Querschnitt des Außenluftanschlusses (10) verengend ausgebildet ist.

11. Vorrichtung nach Anspruch 9, **dadurch gekennzeichnet, dass** die erste Bypassanordnung (11) als ein in dem Wärmetauschergehäuse (4) angeordneter und verschließbarer Kanal zwischen dem Abluftstromanschluss (6) und dem Fortluftstromanschluss (7) ausgebildet ist.

12. Vorrichtung nach Anspruch 9, **dadurch gekennzeichnet, dass** der Abluftstrom in einem in dem Wärmetauschergehäuse (5) angeordneten und den Luft-Flüssigkeit-Wärmetauscher (4) umgehenden Bypasskanal zum Außenluftanschluss (10) führbar ist.

13. Vorrichtung nach Anspruch 8, **dadurch gekennzeichnet, dass** die Temperiervorrichtung (19) ein Umluftgerät oder ein Bodeneinbaugerät oder ein Heiz-Kühldeckensegel oder eine Wandtemperiervorrichtung oder eine Fußbodentemperiervorrichtung oder eine Kombination aus diesen ist.

14. Vorrichtung nach Anspruch 8, **dadurch gekennzeichnet, dass** die Temperiervorrichtung (19) in einem Zuluftstrom des Gebäudes angeordnet ist.

15. Vorrichtung nach Anspruch 8, **dadurch gekennzeichnet, dass** ein Zuluftstrom über einen Außenluftdurchlass oder über ein Zuluftgerät dem Gebäude zuführbar ist und dass im Falle des Zuluftgerätes ein den Zuluftstrom temperierender Luft-Flüssigkeit-Wärmetauscher des Zuluftgerätes über einen weiteren Flüssigkeitskreislauf mit dem ersten und/oder dem zweiten Pufferspeicher (1, 2) verbunden ist.

16. Vorrichtung nach Anspruch 8, **dadurch gekennzeichnet, dass** die Temperiereinheiten in Teilströmen des Zuluftstroms angeordnet sind.

17. Vorrichtung nach Anspruch 9, **dadurch gekennzeichnet, dass** ein Verdichter und eine Drossel der Wärmepumpenanordnung (3) außerhalb oder innerhalb des Wärmetauschergehäuses (5) angeordnet sind.

18. Vorrichtung nach Anspruch 8, 9 oder 15, **dadurch gekennzeichnet, dass** das Wärmetauschergehäuse und/oder die Wärmepumpenanordnung und/oder das Zuluftgerät und/oder die Pufferspeicher in einem Gehäuse angeordnet.

## Claims

1. Method for air conditioning a building, wherein, in a first heating mode, air-flow heat energy from an exhaust air flow from the building is transferred to a heat accumulator and this exhaust air flow is then expelled as a discharge air flow and, if required, heat energy from the heat accumulator is transferred to the building as building heat energy, and wherein, in a first cooling mode, heat energy from a cold accumulator is transferred to the exhaust air flow from the building and this exhaust air flow is then expelled as a discharge air flow, and, if required, building heat energy from the building is transferred to the cold accumulator, and wherein, in a second heating mode, the exhaust air flow of the building is mixed with the outside air flow to form a mixed air flow and the air-flow heat energy of this mixed air flow is transferred to the heat accumulator, and the mixed air flow is then expelled as a discharge air flow and, if required, heat energy from the heat accumulator is transferred to the building as building heat energy, and wherein, in a second cooling mode, the exhaust air flow of the building is mixed with the outside air flow to form a mixed air flow and heat energy is transferred from the cold accumulator to this mixed air flow and the mixed air flow is then expelled as a discharge air flow, and, if required, building heat energy from the building is transferred to the cold accumulator, and wherein, in a comfort mode, air-flow heat energy from the exhaust air flow from the building is transferred to the heat accumulator alternately with heat energy from the cold accumulator being transferred to the exhaust air flow and this exhaust air flow is expelled as a discharge air flow and, if required, heat energy from the heat accumulator is fed to the building as building heat energy and/or building heat energy is fed from the building to the cold accumulator, and wherein, in an energy-saving mode, the exhaust air flow is expelled directly as a discharge air flow.

2. Method according to claim 1, **characterised in that** the outside air flow is mixed with the exhaust air flow before the heat energy of the air flow is transferred to the heat accumulator or before the heat energy of the cold accumulator is transferred to the exhaust air flow, and the outside air flow is then expelled with the exhaust air flow as a discharge air flow.

3. Method according to claim 1 or 2, **characterised in that**, when mixing the exhaust air flow with the outside air flow, the proportions of the exhaust air flow and the outside air flow are varied.

4. Method according to claim 1, **characterised in that**, in a fire mode, an exhaust air flow from the building carrying smoke gases is expelled to the outside air.

5. Method according to claim 1 or 2, **characterised in that**, temperature-regulated or - unregulated outside air is fed to the building as a supply air flow.

6. Method according to claim 5, **characterised in that**, in the first heating mode and in the second heating mode, at least part of the building heat energy is transferred from the heat accumulator to the supply air flow of the building.

7. Method according to claim 5, **characterised in that**, in the first cooling mode and in the second cooling mode, supply-air heat energy of the supply air flow of the building is transferred to the cold accumulator.

8. Building with a device for air conditioning the building, wherein the device comprises a first buffer accumulator (1), a second buffer accumulator (2), a reversible-action heat-pump arrangement (3), an air-liquid heat exchanger (4), a first liquid-liquid heat exchanger (13) arranged in the first buffer accumulator (1), and a second liquid-liquid heat exchanger (14) arranged in the second buffer accumulator (2), and the heat-pump arrangement (3) is switchable between a first coolant circuit between the first liquid-liquid heat exchanger (13) and the air-liquid heat exchanger (4) and a second coolant circuit between the second liquid-liquid heat exchanger (14) and the air-liquid heat exchanger (4), and wherein the first buffer accumulator (1) and the second buffer accumulator (2) are connected to a temperature-regulating device (19) arranged within the building, **characterised in that** an exhaust air flow from the building can be guided by a deflecting device through the air-liquid heat exchanger (4) or along a first bypass arrangement (11) that bypasses the air-liquid heat exchanger (4), and **in that** an outside air flow can be mixed into the exhaust air flow via a second bypass arrangement (12), and **in that** the two buffer accumulators (1, 2) can be operated as heat accumulators and cold accumulators, and **in that** the temperature-regulating device (19) comprises local temperature-regulating units, and **in that** these temperature-regulating units are arranged in individual rooms of the building, and **in that** each of the temperature-regulating units is connected to the first and to the second buffer accumulator (1, 2).

9. Device according to claim 8, **characterised in that** the air-liquid heat exchanger (4) is surrounded by a heat-exchanger housing (5), and that this heat-exchanger housing (5) has an exhaust air flow connection (6), a discharge air flow connection (7), a first coolant connection (8) of the heat-pump arrangement (3), a second coolant connection (9) of the heat-pump arrangement (3) and an outside air connection (10), and that the second bypass arrangement (12) is constructed as a closure device that can regulate the outside air connection (10).

10. Device according to claim 9, **characterised in that** the closure device is a closing flap and that this closing flap is designed to narrow a cross-section of the outside air connection (10).

11. Device according to claim 9, **characterised in that** the first bypass arrangement (11) is constructed as a closable duct arranged in the heat-exchanger housing (4) between the exhaust air flow connection (6) and the discharge air flow connection (7).

12. Device according to claim 9, **characterised in that** the exhaust air flow can be guided to the outside air connection (10) in a bypass duct arranged in the heat-exchanger housing (5) and bypassing the air-liquid heat exchanger (4).

13. Device according to claim 8, **characterised in that** the temperature-regulating device (19) is a recirculating-air device or a device built into the floor or a ceiling-mounted heated/cooling sail or a wall-mounted temperature-regulating device or a floor-mounted temperature-regulating device or a combination thereof.

14. Device according to claim 8, **characterised in that** the temperature-regulating device (19) is arranged in a supply air flow of the building.

15. Device according to claim 8, **characterised in that** a flow of supply air can be fed to the building via an outside air in-/outlet or via a 2, and **in that**, in the case of the supply-air device, an air-liquid heat exchanger of the supply-air unit that regulates the temperature of the supply air flow is connected via a further liquid circuit to the first and/or the second buffer accumulator (1, 2).

16. Device according to claim 8, **characterised in that** the temperature-regulating units are arranged in partial flows of the supply air flow.

17. Device according to claim 9, **characterised in that** a compressor and a throttle of the heat-pump arrangement (3) are arranged outside or inside the heat-exchanger housing (5).

18. Device according to claim 8, 9 or 15, **characterised in that** the heat-exchanger housing and/or the heat-pump arrangement and/or the supply-air device and/or the buffer accumulators are arranged in a housing.

## Revendications

1. Procédé de climatisation d'un bâtiment, **caractérisé en ce que** dans un premier mode de chauffage, l'énergie thermique d'un flux d'air sortant du bâtiment est transférée à un accumulateur de chaleur et ce flux d'air sortant est évacué ensuite en tant que flux d'air évacué et en cas de besoin, l'énergie thermique de l'accumulateur de chaleur est transférée au bâtiment en tant qu'énergie thermique du bâtiment, et où, dans un premier mode de refroidissement, l'énergie thermique d'un accumulateur de froid est transférée au flux d'air sortant du bâtiment, ce flux d'air sortant étant évacué ensuite en tant que flux d'air évacué et en cas de besoin, l'énergie thermique du bâtiment est transférée à l'accumulateur de froid, et où dans un second mode de chauffage, le flux d'air sortant du bâtiment est mélangé au flux d'air extérieur pour créer un flux d'air mixte et l'énergie thermique de ce flux d'air mixte est transférée dans l'accumulateur de chaleur puis évacué en tant que flux d'air évacué et en cas de besoin, l'énergie thermique de l'accumulateur de chaleur est transférée au bâtiment en tant qu'énergie thermique du bâtiment, et où dans un second mode de refroidissement, le flux d'air sortant du bâtiment est mélangé au flux d'air extérieur pour créer un flux d'air mixte et l'énergie thermique de l'accumulateur de froid est transférée à ce flux d'air mixte qui est évacué ensuite en tant que flux d'air évacué et en cas de besoin, l'énergie thermique du bâtiment est transférée à l'accumulateur de froid, et où dans un mode Confort, sont transférées alternativement l'énergie thermique du flux d'air sortant du bâtiment à l'accumulateur de chaleur et l'énergie thermique de l'accumulateur de froid au flux d'air sortant, ce flux d'air sortant étant évacué en tant que flux d'air évacué et en cas de besoin, l'énergie thermique de l'accumulateur de chaleur est transférée au bâtiment en tant qu'énergie thermique et/ou l'énergie thermique du bâtiment est transférée à l'accumulateur de froid, et où dans un mode Économie d'énergie, le flux d'air sortant est évacué directement en tant que flux d'air évacué.

2. Procédé selon la revendication 1 **caractérisé en ce que** le flux d'air extérieur est ajouté au flux d'air sortant avant le transfert de l'énergie thermique du flux d'air à l'accumulateur de chaleur ou avant le transfert de l'énergie thermique de l'accumulateur de froid au flux d'air sortant et le flux d'air extérieur est évacué ensuite avec le flux d'air sortant en tant que flux d'air évacué.

3. Procédé selon la revendication 1 ou 2, **caractérisé en ce que** lors du mélange du flux d'air sortant et du flux d'air extérieur, les proportions du flux d'air sortant et du flux d'air extérieur sont ajustées.

4. Procédé selon la revendication 1, **caractérisé en ce que** dans un mode Incendie, un flux d'air d'évacuation des gaz de fumée du bâtiment est évacué vers l'air extérieur.

5. Procédé selon la revendication 1 ou 2, **caractérisé en ce que** l'air extérieur régulé thermiquement ou non régulé thermiquement est amené vers le bâtiment en tant que flux d'air amené.

6. Procédé selon la revendication 5, **caractérisé en ce que** dans le premier mode de chauffage et dans le second mode de chauffage, au moins une partie de l'énergie thermique du bâtiment est transférée de l'accumulateur de chaleur au flux d'air amené du bâtiment.

7. Procédé selon la revendication 5, **caractérisé en ce que** dans le premier mode de refroidissement et dans le second mode de refroidissement, l'énergie thermique du flux d'air amené du bâtiment est transférée à l'accumulateur de froid.

8. Bâtiment équipé d'un dispositif de climatisation, dans lequel ledit dispositif comprend un premier réservoir tampon (1), un second réservoir tampon (2), un système de pompe à chaleur réversible (3), un échangeur de chaleur air/liquide (4), un premier échangeur de chaleur liquide/liquide (13) disposé dans le premier réservoir tampon (1) et un second échangeur de chaleur liquide/liquide (14) disposé dans le second réservoir tampon (2) et où le système de pompe à chaleur (3) réversible forme un premier circuit de refroidissement entre le premier échangeur de chaleur liquide/liquide (13) et l'échangeur de chaleur air/liquide (4) et un second circuit de refroidissement entre le second échangeur de chaleur liquide/liquide (14) et l'échangeur de chaleur air/liquide (4), et où le premier réservoir tampon (1) et le second réservoir tampon (2) sont reliés à un dispositif de régulation thermique (19) disposé dans le bâtiment, **caractérisé en ce qu'**un flux d'air sortant du bâtiment peut être acheminé par le biais d'un dispositif de dérivation dans l'échangeur de chaleur air/liquide (4) ou le long d'un premier système de dérivation (11) contournant l'échangeur de chaleur air/liquide (4), et **en ce qu'**un flux d'air extérieur peut être ajouté par le biais d'un second système de dérivation (12) au flux d'air sortant, et **en ce que** les deux réservoirs tampons (1, 2) sont utilisables comme accumulateur de chaleur et accumulateur de froid, et **en ce que** le dispositif de régulation thermique (19) comprend des unités de régulation thermique locales, et **en ce que** ces unités de régulation thermique sont disposées dans des locaux individuels du bâtiment et **en ce que** les unités de régulation thermique sont reliées chacune au premier et au second réservoir tampon (1, 2).

9. Dispositif selon la revendication 8, **caractérisé en ce que** l'échangeur de chaleur air/liquide (4) est entouré d'un corps d'échangeur de chaleur (5) et **en ce que** ce corps d'échangeur de chaleur (5) comporte un raccord de flux d'air sortant (6), un raccord de flux d'air évacué (7), un premier raccord d'agent de refroidissement (8) du système de pompe à chaleur (3), un second raccord d'agent de refroidissement (9) du système de pompe à chaleur (3) et un raccord d'air extérieur (10) et **en ce que** le second système de dérivation (12) est conçu comme un système de fermeture capable de réguler le raccord d'air extérieur (10).

10. Dispositif selon la revendication 9, **caractérisé en ce que** le dispositif de fermeture est un clapet de fermeture et **en ce que** ce clapet de fermeture est conçu de manière à rétrécir une section du raccord d'air extérieur (10).

11. Dispositif selon la revendication 9, **caractérisé en ce que** le premier système de dérivation (11) est conçu comme un conduit refermable disposé dans le corps de l'échangeur de chaleur (4), entre le raccord de flux d'air sortant (6) et le raccord de flux d'air évacué (7).

12. Dispositif selon la revendication 9, **caractérisé en ce que** le flux d'air sortant peut être acheminé jusqu'au raccord d'air extérieur (10) dans un conduit de dérivation contournant l'échangeur de chaleur air-liquide (4) et disposé dans le corps de l'échangeur de chaleur (5).

13. Dispositif selon la revendication 8, **caractérisé en ce que** le dispositif de régulation thermique (19) est un appareil de recirculation d'air, un appareil intégré au sol, un plafond suspendu de chauffage/refroidissement, un dispositif de régulation thermique mural, un dispositif de régulation thermique au sol ou l'une de leurs combinaisons.

14. Dispositif selon la revendication 8, **caractérisé en ce que** le dispositif de régulation thermique (19) est disposé dans un flux d'air amené du bâtiment.

15. Dispositif selon la revendication 8 **caractérisé en ce qu'**un flux d'air amené peut être acheminé dans le bâtiment par le biais d'un passage d'air extérieur ou d'un appareil d'amenée d'air, et **en ce que** dans le cas de l'appareil d'amenée d'air, un échangeur de chaleur air/liquide de l'appareil de ventilation, lequel régule la température du flux d'air amené, est relié par le biais d'un autre circuit de liquide au premier et/ou au second réservoir tampon (1, 2).

16. Dispositif selon la revendication 8, **caractérisé en ce que** les unités de régulation thermique sont ordonnées en flux partiels du flux d'air amené.

17. Dispositif selon la revendication 9, **caractérisé en ce qu'**un compresseur et un dispositif d'étranglement du système de pompe à chaleur (3) sont disposés à l'extérieur ou à l'intérieur du corps de l'échangeur de chaleur (5).

18. Dispositif selon la revendication 8, 9 ou 15, **caractérisé en ce que** le corps de l'échangeur de chaleur et/ou le système de pompe à chaleur et/ou l'appareil d'amenée d'air et/ou les réservoirs tampons sont disposés dans un boîtier.
